# FASCICULE DE BREVET EUROPEEN

(11) **EP 1 988 002 B1**
(45) Date de publication et mention de la délivrance du brevet: **26.10.2011**
(21) Numéro de dépôt: 08102805.2
(22) Date de dépôt: 20.03.2008
(51) Int. Cl.: B62D 1/16, F16C 19/16, F16C 27/04, F16C 35/073, B60R 16/027

(54) **Dispositif de palier à roulement pour colonne de direction.**
Wälzlagervorrichtung für Lenksäule
Rolling bearing device for a steering column

(30) Priorité: 04.05.2007 FR 0754873
(43) Date de publication de la demande: 05.11.2008
(73) Titulaire: Aktiebolaget SKF, 415 50 Göteborg (SE)
(72) Inventeur: Delos, Jacques, 45390, DESMONTS (FR); Montboeuf, Bruno, 37390, CERELLES (FR)
(74) Mandataire: Dossmann, Gérard

(56) Documents cités:
- DE-A1- 2 758 741
- DE-A1- 10 300 725
- FR-A- 2 744 776
- FR-A- 2 782 758
- JP-A- 2002 130 310
- US-A- 3 917 425

## Description

L'invention concerne le domaine des paliers à roulement, notamment les paliers à roulements utilisés dans les colonnes de direction de véhicules automobiles.

Dans une colonne de direction, un roulement peut être monté dans un logement tubulaire et un arbre destiné à tourner par rapport au logement. Le roulement est monté dans le logement par sa bague extérieure et est monté sur l'arbre par l'intermédiaire d'un manchon ou bague de tolérance assurant l'interface entre l'arbre et la bague intérieure du roulement. <page 2a>

On peut également se reporter au document DE A 103 00 725 d'après lequel un manchon métallique déformable radialement permet d'assurer une liaison mécanique entre la bague intérieure du roulement et l'arbre tout en s'affranchissant des tolérances de fabrication des bagues.

Le manchon permet d'autre part, grâce à ses propriétés conductrices, un passage de courant de faible intensité entre la partie fixe et la partie tournante de la colonne, via la bague extérieure, les billes, et la bague intérieure. Ceci peut par exemple être utilisé pour la connexion électrique de la commande du klaxon, ladite commande étant souvent située sur la partie tournante du volant.

Toutefois, le manchon métallique utilisé présente une forme relativement complexe. Le manchon comporte une fente axiale 9.1 destinée à donner audit manchon une certaine élasticité radiale lui permettant de se resserrer sur l'arbre par effet de coin des portions coniques 9.2 du manchon dans la bague intérieure. L'effort axial nécessaire pour provoquer un resserrage efficace du manchon sur l'arbre est relativement important et son intensité difficile à maîtriser.

La retenue axiale de l'ensemble roulement/manchon se fait en formant une collerette 9.7 sur la face avant du manchon, cette opération se faisant après avoir mis en place le manchon sur le roulement assemblé. Ceci constitue une opération supplémentaire et donc des coûts augmentés.

On peut se reporter au mode de réalisation illustré aux figures 27 à 29 du document FR 2 744 776 décrivant un dispositif de palier à roulement comprenant une bague intérieure, une bague extérieure, et un manchon d'auto-alignement et de retenue axiale de la bague intérieure montée sur une douille de guidage. Le manchon comporte des languettes élastiques découpées dans le sens axial et faisant saillie radialement vers l'extérieur en direction d'un alésage de la bague intérieure. Les caractéristiques du préambule de la revendication 1 sont connues du ce document.

La présente invention se propose de remédier aux inconvénients évoqués ci-dessus.

La présente invention vise un palier à roulement de structure simple et pouvant être fabriqué à des prix de revient raisonnables.

Le dispositif de palier à roulement à contact oblique comprend une bague extérieure, une bague intérieure, une rangée d'éléments roulants disposée entre les bagues extérieure et intérieure, et un manchon disposé dans la bague intérieure. Le manchon comprend une portion axiale cylindrique et des languettes d'appui sur la bague intérieure. Les languettes d'appui sont issues de la portion axiale cylindrique et flexibles radialement. Les languettes d'appui comprennent à l'état libre une partie de base sensiblement axiale et une partie d'extrémité sensiblement oblique disposée en contact avec la bague intérieure. Les languettes d'appui sont susceptibles, par effet de coin avec la bague intérieure, de se resserrer radialement vers l'intérieur.

Un mouvement axial de la partie d'extrémité oblique du manchon dirigé vers la bague intérieure provoque ainsi un contact et une solidarisation angulaire accrue de la partie de base avec l'arbre et de la partie d'extrémité avec la bague intérieure. En d'autres termes, ce mouvement axial provoque une déformation radiale vers l'intérieur des languettes.

Le manchon peut être fabriqué et monté de façon simple.

Dans un mode de réalisation, les languettes d'appui comprennent une face extérieure en contact avec la bague intérieure et une face intérieure destinée à venir en contact avec un arbre. Les languettes assurent une double fonction de solidarisation angulaire avec la bague intérieure et avec l'arbre.

Dans un mode de réalisation, les languettes d'appui se raccordent à une zone annulaire du manchon. La zone annulaire assure un support ferme des languettes.

Dans un mode de réalisation, les languettes d'appui présentent une longueur axiale inférieure à celle de la portion axiale cylindrique du manchon.

Dans un mode de réalisation, le manchon comprend des moyens de retenue axiale dudit manchon sur l'arbre, lesdits moyens de retenue axiale étant intégrés au manchon. Le nombre de pièces est faible.

Dans un mode de réalisation, lesdits moyens de retenue axiale comprennent des griffes ou languettes de blocage axial comprenant des extrémités configurées pour serrer sur un arbre. Les griffes ou languettes peuvent être inclinées par rapport à un plan radial. Les griffes ou languettes peuvent présenter une extrémité libre du côté intérieur. Les griffes ou languettes peuvent être dirigées axialement à l'opposé des éléments roulants.

Dans un mode de réalisation, le dispositif peut comprendre un organe de blocage axial du manchon en appui sur une surface dudit manchon. L'organe de blocage peut comprendre une rondelle-frein.

Dans un mode de réalisation, le dispositif peut comprendre une cage de maintien des éléments roulants, ladite cage comprenant des moyens de retenue axiale sur le manchon et des moyens de retenue axiale sur la bague extérieure. La cage peut être réalisée en matériau synthétique moulé. La cage peut comprendre une portion annulaire axiale de petit diamètre s'étendant d'un côté des éléments roulants et une portion annulaire axiale de grand diamètre s'étendant de l'autre côté des éléments roulants. La portion annulaire axiale de petit diamètre peut comprendre des moyens de retenue de la bague extérieure, par exemple au moins une protubérance. La portion annulaire axiale de grand diamètre peut comprendre des moyens de retenue du manchon, par exemple au moins une protubérance. Le palier à roulement peut former un ensemble à faible risque de démontage accidentel avant l'assemblage de la colonne de direction.

Le palier à roulement peut être à contact oblique. L'un des chemins de roulement peut s'étendre d'un côté d'un plan radial et l'autre chemin de roulement de l'autre côté dudit plan.

Les bagues extérieure et intérieure peuvent être en tôle d'épaisseur sensiblement constante. Les bagues extérieure et intérieure peuvent être réalisées par emboutissage d'une portion de tube. La bague intérieure peut comprendre une portion axiale et une portion toroïdale. La bague extérieure peut comprendre une portion axiale, une portion toroïdale et un rebord radial. La bague extérieure peut comprendre une zone d'emmanchement dans le logement, décalée axialement par rapport au chemin de roulement d'une distance supérieure au rayon du chemin de roulement.

Le manchon peut comprendre une portion sensiblement radiale s'étendant vers l'extérieur à partir d'une extrémité de la portion axiale.

Le manchon peut comprendre une portion arrondie sur au moins 135° s'étendant à l'opposé des éléments roulants à partir de l'extrémité de grand diamètre de la portion sensiblement radiale. Le manchon peut comprendre une portion découpée en doigts séparés circonférentiellement. Les doigts peuvent s'étendre vers l'intérieur et à l'opposé des éléments roulants à partir de l'extrémité de la portion arrondie opposée aux éléments roulants. Les doigts peuvent présenter un diamètre minimal à l'état libre inférieur au diamètre de l'alésage de la portion axiale du manchon.

La colonne de direction peut comprendre un logement, un arbre et un dispositif tel que décrit ci dessus monté entre le logement et l'arbre. La colonne de direction peut être assemblée de façon simple, robuste et économique.

La présente invention sera mieux comprise à la lecture de la description de quelques modes de réalisation, donnés à titre d'exemples nullement limitatifs et illustrés sur les dessins annexés :
- la figure 1 est une vue en coupe axiale d'un palier à roulement selon un premier mode de réalisation;
- la figure 2 est une vue de face en élévation du palier de la figure 1;
- la figure 3 est une demi-vue en coupe axiale du palier de la figure 1 dans une colonne de direction en cours de montage;
- la figure 4 est une demi-vue en coupe axiale du palier de la figure 1 dans une colonne de direction montée;
- la figure 5 est une vue en coupe axiale d'un palier à roulement selon un deuxième mode de réalisation; et
- la figure 6 est une demi-vue en coupe axiale du palier de la figure 5 dans une colonne de direction montée.

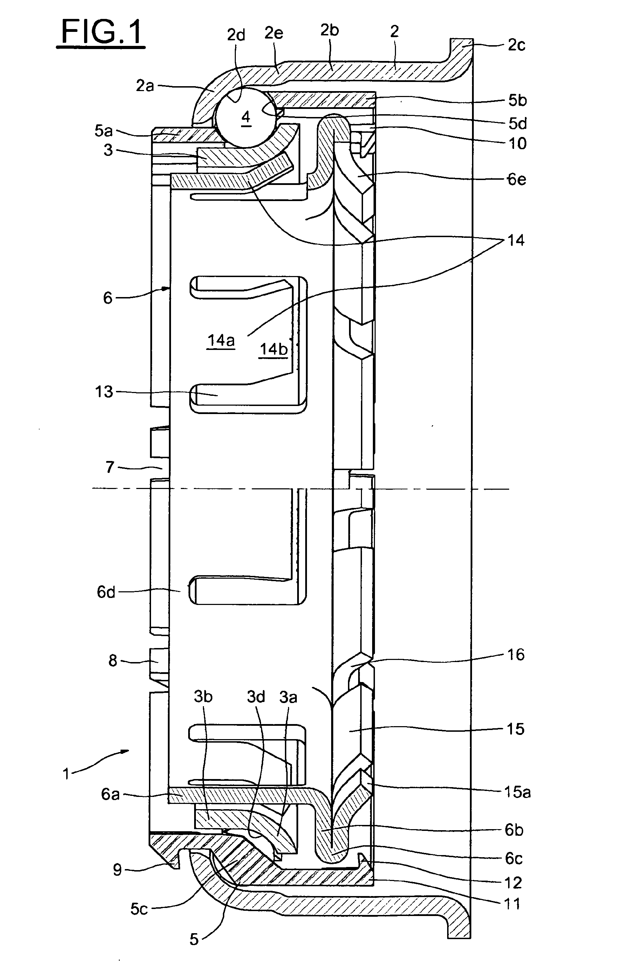

Comme on peut le voir sur la figure 1, le palier à roulement 1 comprend une bague extérieure 2, une bague intérieure 3, une rangée d'éléments roulants 4, une cage 5 de maintien de l'espacement circonférentiel régulier des éléments roulants 4 et un manchon 6 monté dans la bague intérieure 3.

La bague extérieure 2 comprend une portion toroïdale 2a, une portion axiale 2b et un rebord radial 2c. La portion axiale 2b est disposée entre la portion toroïdale 2a et le rebord radial 2c. La portion toroïdale 2a présente une surface intérieure concave en coupe axiale formant un chemin de roulement 2d pour les éléments roulants 4, par exemple des billes. La portion toroïdale 2a peut s'étendre sur un secteur angulaire de l'ordre de 45 à 90°.

La portion axiale 2b peut présenter un léger épaulement 2e la divisant en une partie de petit diamètre situé dans le prolongement de la portion toroïdale 2a et une partie de grand diamètre du côté du rebord radial 2c. Le rebord radial 2c est dirigé radialement vers l'extérieur à partir de la portion axiale 2b. La portion toroïdale 2a est dirigée radialement vers l'intérieur à partir de la portion axiale 2b.

La bague intérieure 3 comprend une portion toroïdale 3a et une portion axiale cylindrique 3b. La portion toroïdale 3a forme sur sa surface extérieure concave en coupe axiale un chemin de roulement 3d pour les éléments roulants 4. Le chemin de roulement 2d est disposé d'un côté et le chemin de roulement 3d de l'autre côté d'un plan radial passant par le centre des éléments roulants 4. La portion axiale 3b de la bague intérieure 3 est disposée du même côté dudit plan radial que le portion toroïdale 2a de la bague extérieure 2. La portion toroïdale 3a de la bague intérieure 3 et la portion axiale 2b de la bague extérieure 2 sont disposées du même côté dudit plan radial. Le palier à roulement 1 offre un contact oblique pour les éléments roulants 4, donnant ainsi une capacité de reprendre des charges axiales selon une direction et des charges radiales. Les bagues extérieure 2 et intérieure 3 peuvent être réalisées à partir d'une portion de tube ou à partir d'une feuille de tôle, par exemple par découpe et emboutissage. L'épaisseur des bagues extérieure 2 et intérieure 3 peut être sensiblement constante.

La cage 5 peut être réalisée en matériau synthétique, par exemple un polyamide éventuellement renforcé par une charge minérale. La cage 5 comprend une portion annulaire axiale 5a de petit diamètre passant entre l'extrémité libre de la portion toroïdale 2a de la bague extérieure 2 et une surface extérieure de la portion axiale 3b de la bague intérieure 3, et une portion annulaire axiale 5b de grand diamètre disposée du côté opposé, en d'autres termes passant entre l'extrémité libre de la portion toroïdale 3a de la bague intérieure 3 et un alésage de la portion axiale 2b de la bague extérieure 2. Les portions annulaires axiales 5a et 5b s'étendent au-delà des extrémités axiales de la bague intérieure 3.

La cage 5 comprend également une portion centrale oblique 5c dans laquelle sont ménagées les alvéoles 5d pour les éléments roulants 4 et possédant une surface intérieure tronconique et une surface extérieure tronconique. Une extrémité de la portion oblique 5c se raccorde avec la portion annulaire axiale 5a tandis que l'autre extrémité se raccorde avec la portion 5b.

La portion annulaire axiale 5a de petit diamètre est munie de découpes 7 orientées axialement et s'étendant à partir de son extrémité libre. Les découpes 7 délimitent des pattes flexibles 8 munies sur leur surface extérieure d'un crochet 9. Les crochets 9 présentent à l'état libre un diamètre extérieur supérieur au diamètre minimal de la bague extérieure 2. Les crochets 9 forment donc des moyens de retenue axiale de la cage 5 sur la bague extérieure 2. Les crochets 9 peuvent être munis d'une surface oblique en vue de l'engagement dans la bague extérieure 2 et d'une surface sensiblement radiale en vue de la retenue sur la bague extérieure 2.

La portion annulaire axiale 5b de grand diamètre est munie de découpes 10 délimitant des pattes axiales flexibles 11, les découpes 10 étant orientées axialement à partir de l'extrémité libre de la portion axiale annulaire 5b. Les pattes flexibles 11 sont munies de crochets 12 dirigés vers l'intérieur en vue de la retenue du manchon 6.

Le manchon 6 comprend une portion annulaire axiale 6a disposée dans l'alésage de la bague intérieure 3, une portion radiale 6b s'étendant vers l'extérieur à partir d'une extrémité de la portion axiale 6a du côté de la portion axiale annulaire 5b de grand diamètre de la cage 5, et une portion arrondie 6c sur sensiblement 180° et venant à proximité de l'alésage de la portion axiale annulaire 5b de grand diamètre de la cage 5. Les crochets 12 de la cage 5 sont prévus pour coopérer avec ladite portion arrondie 6c et évitent ainsi le risque de séparation accidentelle du manchon 6 et de la bague intérieure 3 par rapport aux autres éléments dans des conditions normales de manipulation.

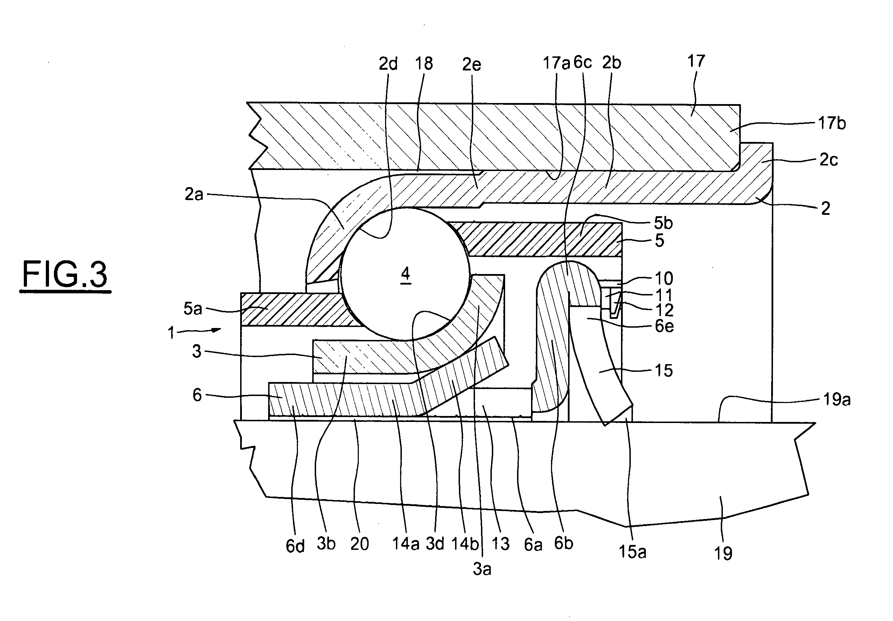

Une pluralité de découpes 13 sont ménagées dans la portion annulaire axiale 6a du manchon 6 et circonférentiellement régulièrement réparties. Les découpes 13 présentent une forme générale de U dont le fond est disposé du côté de la portion radiale 6b. Les découpes 13 laissent subsister une zone annulaire continue 6d du côté de l'extrémité libre de la portion axiale 6a. Les découpes 13 délimitent des languettes 14. Les languettes 14 comprennent une portion de base 14a reliée à la zone annulaire 6d et d'orientation sensiblement axiale à l'état libre comme illustré sur les figures 1 et 3, et une portion d'extrémité 14b légèrement oblique vers l'extérieur à l'état libre. La portion d'extrémité 14b est en contact avec la surface intérieure de la portion toroïdale 3 de la bague intérieure 3. La portion de base 14a est située à distance de la surface intérieure de la portion axiale cylindrique 3b.

La pente de la portion oblique à l'état libre peut être de l'ordre de 5 à 35°.

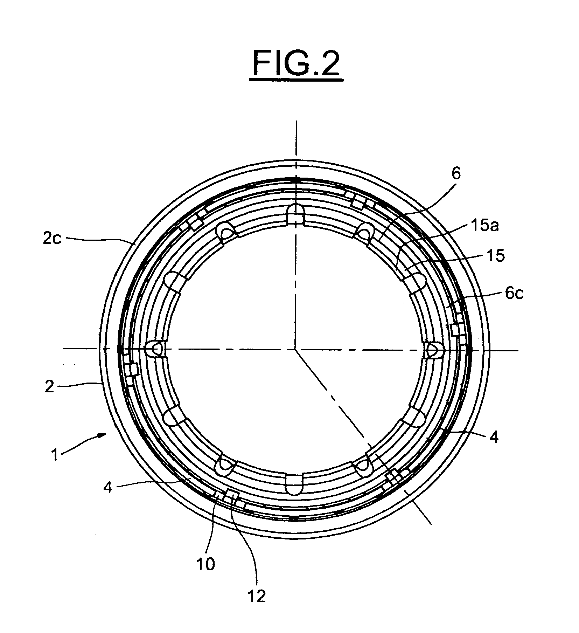

Dans le mode de réalisation illustré sur les figures 1 à 4, le manchon 6 comprend en outre une partie 6e de retenue axiale sur un arbre. La partie de maintien 6e comprend une pluralité de languettes 15 séparées par des découpes 16 et possédant une extrémité libre 15a présentant un diamètre à l'état libre inférieur au diamètre de l'alésage de la partie axiale 6a. Les languettes 15 sont légèrement inclinées par rapport à un plan radial et dans une direction axialement opposée aux éléments roulants 4.

Les languettes 15 autorisent ainsi le montage du manchon 6 sur l'arbre 16 par déplacement axial relatif dans une direction, lesdites languettes 15 interdisant tout déplacement axial relatif dans une direction opposée par arc-boutement des languettes sur l'arbre. La partie de maintien 6e peut se présenter sous la forme d'une portion légèrement toroïdale s'étendant à partir de la portion arrondie 6c radialement vers l'intérieur et axialement à l'opposé des éléments roulants 4.

Comme on peut le voir sur la figure 3, le palier à roulement 1 est disposé dans un logement 17 comprenant un alésage 17a et une surface latérale radiale 17b. La portion axiale 2b de la bague extérieure 2 est emmanchée dans l'alésage 17a, en particulier par sa partie de grand diamètre située entre le léger épaulement 2e et le rebord radial 2c. Le rebord radial 2c est en contact avec la surface latérale 17b, ce qui permet de définir avec précision la position axiale du palier à roulement 1. Le léger épaulement 2e permet de laisser un faible espace annulaire radial 18 entre la bague extérieure 2 et l'alésage 17a au niveau des éléments roulants 4, ce qui évite que l'emmanchement n'affecte la géométrie des bagues dans la zone de contact des éléments roulants 4 avec les chemins de roulement 2d et 3d.

Le palier à roulement 1 est également disposé autour d'un arbre 19 pourvu d'une surface extérieure axiale 19a. Les extrémités libres 15a des languettes 15 qui forment des griffes d'accrochage du manchon 6 sont en contact avec la surface extérieure 19a et évitent un mouvement de démontage du manchon 6 par rapport à l'arbre 9. Dans la position illustrée sur la figure 3, le palier à roulement 1 est monté mais non serré. En effet, la bague extérieure 2 est emmanchée dans le joint 17. Le manchon 6 est en prise par ces languettes 15 sur l'arbre 19. Néanmoins, les languettes 14 de serrage de la bague intérieure 3 sont toujours à l'état libre avec la partie de base 14a sensiblement axiale.

Un léger espace annulaire 20 subsiste entre les languettes 14 et la surface extérieure 19a.

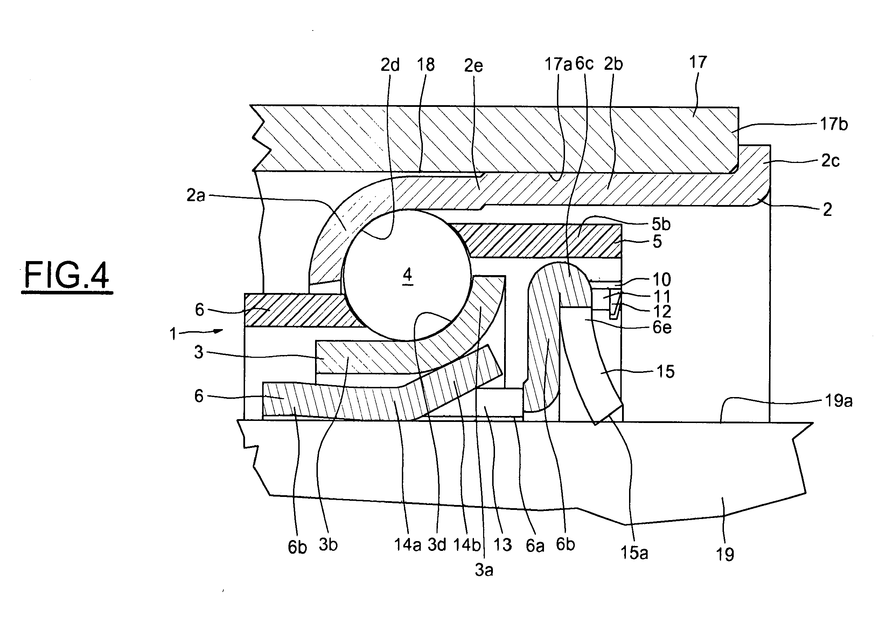

Puis on vient serrer le manchon 6 en exerçant un effort axial du côté des languettes 15 en direction de la bague intérieure 3 du palier à roulement 1. Le manchon 6 se déplace axialement vers la gauche de la figure de manière à obtenir un rapprochement axial de la portion radiale 6b dudit manchon et de la bague intérieure 3 du palier à roulement. L'on remarque sur la figure 4 notamment que la distance entre le manchon 6 et les crochets 12 est notablement augmentée. La partie d'extrémité 14b des languettes étant déjà en contact avec la portion toroïdale 3a de la bague intérieure 3, le mouvement axial du manchon 6 en direction de la portion axiale cylindrique 3b provoque le déplacement des languettes 14 vers l'intérieur jusqu'à ce que la portion de base 14a vienne en appui contre la surface extérieure 19a de l'arbre 19. Dans cette position resserrée des languettes élastiques 14 sur l'arbre 19, la portion d'extrémité 14b en contact avec la portion toroïdale 3a est légèrement moins oblique qu'auparavant, tandis que la portion de base 14a précédemment axiale devient légèrement oblique de sens opposé. Dans cette position, la portion de base 14a reste à distance de la surface intérieure de la portion axiale cylindrique 3b.

Dans l'état illustré sur la figure 4, le manchon 6 offre un appui ferme et stable pour la bague intérieure 3 qui devient dès lors capable de transmettre des efforts radiaux avec un jeu extrêmement réduit voire normalement nul. Par ailleurs, l'écrasement des languettes 14 entre l'arbre 19 et la bague intérieure 3 permet d'assurer une bonne solidarisation en rotation de la bague intérieure 3 avec l'arbre 19. On évite ainsi un glissement angulaire néfaste de la bague intérieure par rapport à l'arbre 19.

Ainsi, lorsque le palier à roulement 1 est positionné entre l'arbre 19 et le logement tubulaire 17, il suffit de pousser axialement sur le manchon 6 en direction du palier à roulement 1. Les languettes élastiques 14 du manchon 6, par effet de coin dans l'alésage du roulement, se déforment radialement en fléchissant à partir de leur emplanture et viennent se resserrer sur l'arbre 19 dans une zone située à partir de la zone coudée des languettes 14.

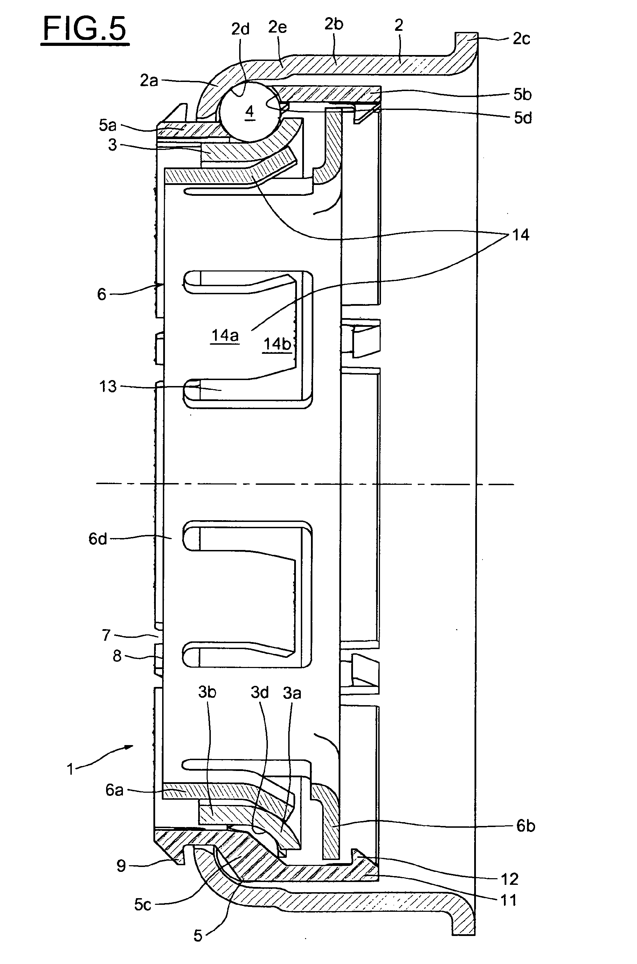

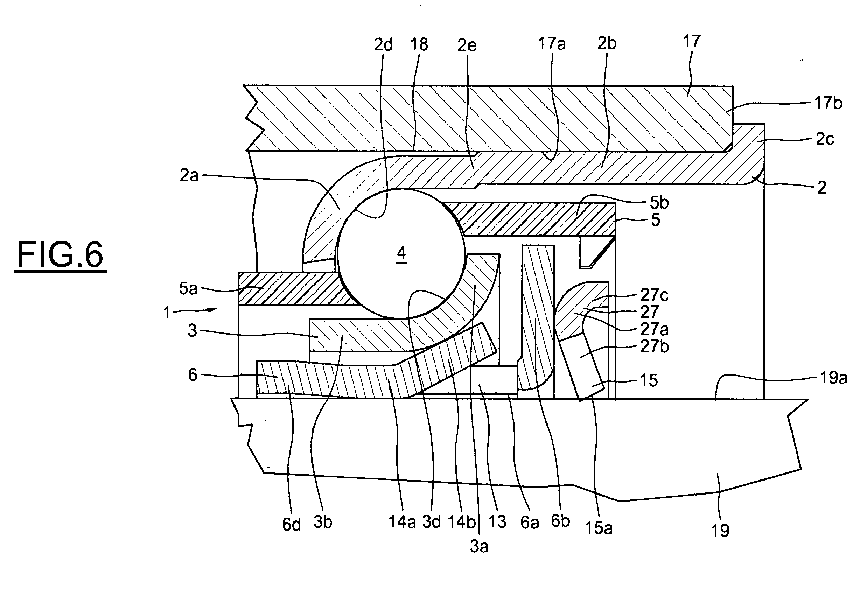

Dans le mode de réalisation illustré sur les figures 5 et 6, les références des éléments semblables ont été conservées. Ce mode de réalisation se distingue du précédent en ce que le manchon 6 se présente sous la forme générale d'une coupelle en section en L. En d'autres termes, le manchon est dépourvu de la portion arrondie 6c et de la portion de retenue 6e. La portion radiale 6b se termine à son extrémité de grand diamètre par une courte surface axiale située en regard de l'alésage de la portion annulaire axiale de grand diamètre 5b de la cage 5 et avec laquelle elle peut former une étanchéité par passage étroit. Les crochets 12 de la cage 5 peuvent coopérer avec la surface extérieure de la portion radiale 6b.

Dans la position finale de montage illustrée sur la figure 6, le palier à roulement 1 est maintenu en place par rapport à l'arbre 19 par une rondelle-frein 27 en contact d'une part, avec la surface extérieure 19a de l'arbre 19 et d'autre part, avec la surface extérieure de la portion radiale 6b du manchon 6. La rondelle-frein 27 peut être disposée axialement entre la portion radiale 6b et l'extrémité libre de la portion axiale de grand diamètre 5b de la cage 5. La rondelle-frein 27 comprend une portion arrondie 27a de forme générale toroïdale offrant une surface convexe en coupe axiale de contact avec la portion radiale 6b du manchon 6, et une partie du maintien 27b sous la forme de languettes 15 possédant une extrémité libre 15a en contact avec la surface extérieure 19a du manchon 19. En outre, la rondelle-frein 27 peut comprendre une courte portion axiale 27c à l'extrémité de grand diamètre de la portion arrondie 27a. La rondelle-frein 27 possède une rigidité suffisante pour garantir le maintien axial du manchon 6 en position par arc-boutement des languettes 15 sur l'arbre 19.

Dans ce mode de réalisation, la rondelle-frein est séparée du manchon contrairement au mode de réalisation précédent où le manchon remplissait la double fonction d'interface entre l'arbre et la bague intérieure et de retenue sur l'arbre.

Grâce à l'invention, on bénéficie d'un manchon de forme relativement simple et de fabrication économique. Le manchon peut en effet se composer globalement de portions axiales ou radiales et de languettes découpées et pliées. Le manchon peut être fabriqué par découpe et emboutissage d'un feuillard ou d'un tube en tôle. Le palier à roulement peut constituer un ensemble unitaire, notamment grâce à la coopération de la cage avec le manchon et comprend également des pièces de formes simples pouvant être fabriquées en grande série à faible coût.

## Revendications

1. Dispositif de palier à roulement (1) comprenant une bague extérieure (2), une bague intérieure (3), une rangée d'éléments roulants (4) disposée entre les extérieure et intérieure, et un manchon (6) disposé dans la bague intérieure et comprenant une portion axiale cylindrique (6a) et des languettes (14) d'appui sur la bague intérieure (3) issues de la portion axiale cylindrique (6a) et flexibles radialement, **caractérisé en ce que** les languettes (14) d'appui comprennent une partie de base (14a) sensiblement axiale et une partie d'extrémité (14b) sensiblement oblique disposée en contact avec la bague intérieure, les languettes (14) d'appui étant susceptibles, par effet de coin avec la bague intérieure, de se resserrer radialement vers l'intérieur.

2. Dispositif selon la revendication 1, dans lequel les languettes (14) d'appui comprennent une face extérieure en contact avec la bague intérieure (3) et une face intérieure destinée à venir en contact avec un arbre.

3. Dispositif selon la revendication 1 ou 2, dans lequel les languettes (14) d'appui présentent une longueur axiale inférieure à celle de la portion axiale cylindrique du manchon (6).

4. Dispositif selon l'une quelconque des revendications précédentes, dans lequel le manchon (6) comprend des moyens de retenue axiale dudit fanchon (6) sur un arbre, lesdits moyens de retenue axiale étant intégrés au manchon (6).

5. Dispositif selon la revendication 4, dans lequel lesdits moyens de retenue axiale comprennent des griffes ou languettes (15) de blocage axial comprenant des extrémités (15a) configurées pour serrer sur un arbre.

6. Dispositif selon la revendication 5, dans lequel les griffes ou languettes (15) sont inclinées par rapport à un plan radial, présentent une extrémité libre du côté intérieur et sont dirigées axialement à l'opposé des éléments roulants (4).

7. Dispositif selon l'une quelconque des revendications 1 à 3, comprenant un organe (27) de blocage axial du manchon (6) en appui sur une surface dudit manchon (6).

8. Dispositif selon l'une quelconque des revendications précédentes, comprenant une cage (5) de maintien des éléments roulants, ladite cage comprenant des moyens de retenue axiale sur le manchon (6) et des moyens de retenue axiale sur la bague extérieure (2).

9. Colonne de direction comprenant un logement (17), un arbre (19), et un dispositif selon l'une quelconque des revendications précédentes, monté entre le logement et l'arbre.

## Claims

1. Rolling bearing device (1) comprising an outer ring (2), an inner ring (3), a row of rolling elements (4) arranged between the outer and inner rings, and a sleeve (6) arranged in the inner ring and comprising a cylindrical axial portion (6a) and tabs (14) for supporting on the inner ring (3), said tabs (14) protruding from the cylindrical axial portion (6a) and being radially flexible, **characterized in that** the supporting tabs (14) comprise a substantially axial base part (14a) and a substantially oblique end part (14b) that is arranged in contact with the inner ring, the supporting tabs (14) being able to tighten radially inwards by a wedge effect with the inner ring.

2. Device according to Claim 1, in which the supporting tabs (14) comprise an outer face in contact with the inner ring (3) and an inner face intended to come into contact with a shaft.

3. Device according to Claim 1 or 2, in which the supporting tabs (14) have an axial length less than that of the cylindrical axial portion of the sleeve (6).

4. Device according to any one of the preceding claims, in which the sleeve (6) comprises means for the axial retention of said sleeve (6) on a shaft, said axial retention means being integrated into the sleeve (6).

5. Device according to Claim 4, in which said axial retention means comprises claws or tabs (15) for axial locking, comprising ends (15a) designed to clamp on a shaft.

6. Device according to Claim 5, in which the claws or tabs (15) are inclined with respect to a radial plane, having a free end on the inner side and are directed axially opposite the rolling elements (4).

7. Device according to any one of Claims 1 to 3, comprising a member (27) for axially locking the sleeve (6) butting against a surface of said sleeve (6).

8. Device according to any one of the preceding claims, comprising a cage (5) for holding the rolling elements, said cage comprising means for axial retention on the sleeve (6) and means for axial retention on the outer ring (2).

9. Steering column comprising a housing (17), a shaft (19) and a device according to any one of the preceding claims, which is mounted between the housing and the shaft.

## Patentansprüche

1. Wälzlagervorrichtung (1), die einen Außenring (2), einen Innenring (3), eine Reihe von rollenden Elementen (4), die zwischen dem Außenring und dem Innenring angeordnet sind, und eine Muffe (6) enthält, die im Innenring angeordnet ist und einen zylindrischen axialen Abschnitt (6a) und Auflagezungen (14) auf dem Innenring (3) enthält, die von dem zylindrischen axialen Abschnitt (6a) stammen und radial flexibel sind, **dadurch gekennzeichnet, dass** die Auflagezungen (14) einen im Wesentlichen axialen Basisbereich (14a) und einen im Wesentlichen schrägen Endbereich (14b) enthalten, der in Kontakt mit dem Innenring angeordnet ist, wobei die Auflagezungen (14) durch Keilwirkung mit dem Innenring in der Lage sind, sich radial nach innen zu verengen.

2. Vorrichtung nach Anspruch 1, bei der die Auflagezungen (14) eine Außenseite in Kontakt mit dem Innenring (3) und eine Innenseite enthalten, die dazu bestimmt ist, mit einer Welle in Kontakt zu kommen.

3. Vorrichtung nach Anspruch 1 oder 2, bei der die Auflagezungen (14) eine geringere axiale Länge als diejenige des zylindrischen axialen Abschnitts der Muffe (6) haben.

4. Vorrichtung nach einem der vorhergehenden Ansprüche, bei der die Muffe (6) Einrichtungen zum axialen Festhalten der Muffe (6) auf einer Welle enthält, wobei die Einrichtungen zum axialen Festhalten in die Muffe (6) integriert sind.

5. Vorrichtung nach Anspruch 4, bei der die Einrichtungen zum axialen Festhalten Klauen oder Zungen (15) zur axialen Blockierung enthalten, die Enden (15a) enthalten, welche konfiguriert sind, um auf eine Welle zu drücken.

6. Vorrichtung nach Anspruch 5, bei der die Klauen oder Zungen (15) bezüglich einer radialen Ebene geneigt sind, ein freies Ende auf der Innenseite aufweisen und axial den rollenden Elementen (4) entgegengesetzt ausgerichtet sind.

7. Vorrichtung nach einem der Ansprüche 1 bis 3, die ein Organ (27) zur axialen Blockierung der Muffe (6) in Auflage auf einer Fläche der Muffe (6) enthält.

8. Vorrichtung nach einem der vorhergehenden Ansprüche, die einen Haltekäfig (5) der rollenden Elemente enthält, wobei der Käfig Einrichtungen zum axialen Festhalten auf der Muffe (6) und Einrichtungen zum axialen Festhalten auf dem Außenring (2) enthält.

9. Lenksäule, die eine Aufnahme (17), eine Welle (19) und eine Vorrichtung nach einem der vorhergehenden Ansprüche enthält, die zwischen der Aufnahme und der Welle montiert ist.
